# EUROPEAN PATENT SPECIFICATION

(11) **EP 2 868 812 B1**
(45) Date of publication and mention of the grant of the patent: **13.10.2021**
(21) Application number: 14190088.6
(22) Date of filing: 23.10.2014
(51) Int. Cl.: E02F 9/02, B60G 17/005, B66C 13/54, E02F 9/16

(54) **Cab tilting system of a work vehicle having a cab**
Fahrerhauskippsystem eines Arbeitsfahrzeugs mit einem Fahrerhaus
Système de basculement de la cabine d'un véhicule possédant une cabine de travail

(30) Priority: 31.10.2013 US 201314068116
(43) Date of publication of application: 06.05.2015
(73) Proprietor: Deere & Company, Moline, IL 61265 (US)
(72) Inventor: Thompson, Graham, Janesville, IA Iowa 50647 (US); von Holst Dr., Christian, 67310 Hettenleidelheim (DE)
(74) Representative: Dehnhardt, Florian Christopher

(56) References cited:
- EP-A1- 0 247 122
- GB-A- 2 358 839
- JP-A- 2003 171 085
- JP-A- 2009 269 692
- JP-A- 2013 166 482
- US-A- 5 368 118
- US-A1- 2005 264 038

## Description

The invention refers to a cab tilting system for a work vehicle having a loader.

Certain current production agricultural tractors include a cab suspension which provides a manually activated service mode to lower or lift its suspension members by 50 millimeter each direction. But, this operation is independent of loader operation.

Also, on current production agricultural tractors, the cab height is limited by several factors, which leads to a roof line, which finally limits the visible area of the operator. Taller operators, which are sitting higher, sometimes have problems with the available visible area, especially when operating a loader. So-called "panorama windows" have been provided in an effort to enlarge visibility from the cab. However, operators still desire better visibility, and there are factors which limit the size of such a window. Thus, it is desired to improve visibility from the cab during operation of a loader.

This and other objects are achieved by the present invention, wherein a cab tilting system of a work vehicle having a loader is provided. The cab tilting system comprises a front axle, a rear axle, a chassis supported by the front axle and the rear axle. A cab is pivotally coupled to the chassis, and a loader boom is movably mounted on the chassis. A boom cylinder raises and lowers the loader boom. A rear suspension member raises and lowers the cab with respect to the rear axle and/or a front suspension member raises and lowers the chassis together with the cab with respect to the front axle. An operator controlled command unit is provided to operate the loader boom. An electronic control unit is operatively connected to the command unit, the rear suspension member and/or the front suspension member. The electronic control unit automatically operates the rear suspension member and/or the front suspension member to raise and lower the cab to improve visibility of the loader from the cab in response to the command unit operating the loader boom.

Prior art documents US2005264038, JP2009269692, GB2358839, and JP2013166482 disclose various solutions of determining the tilt of the driver's cabin relative to the working vehicle's condition.

For a complete understanding of the objects, techniques, and structure of the invention reference should be made to the following detailed description and accompanying drawings:
- Fig. 1: is a schematic diagram of a cab tilting system of a work vehicle having a loader embodying the invention, and
- Fig. 2: is a logic flow diagram of an algorithm performed by the cab tilting system of Fig. 1.

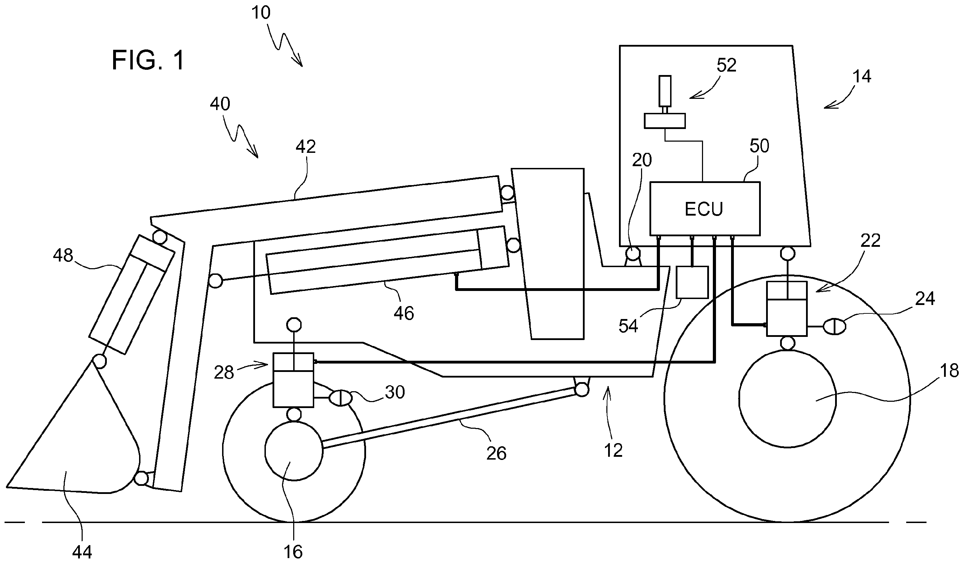

Referring to Fig. 1, a work vehicle 10, such as an agricultural tractor, includes a chassis 12 and a cab 14 supported on a front axle 16 and a rear axle 18. The cab 14 is pivotally supported on the chassis 12 at a pivot 20. The cab 14 is also movably supported on the rear axle 18 by a rear suspension member or rear suspension cylinder 22. The rear suspension cylinder 22 communicates with a rear suspension accumulator 24. The chassis 12 is coupled to the front axle 16 by a suspension link 26 and a front suspension member or front suspension cylinder 28. The front suspension cylinder 28 communicates with a front suspension accumulator 30.

A loader 40 is pivotally mounted to the work vehicle 10. The loader 40 includes a loader boom 42, a bucket 44 pivotally mounted to the loader boom 42, a boom cylinder 46 and a bucket cylinder 48.

The cylinders 22, 28, 46 and 48 are controlled by conventional electrohydraulic valves (not shown) which are controlled by an electronic control unit (ECU) 50. A command unit or joystick 52 is used by an operator to control raising and lowering of the loader 40 and operation of the bucket 44 in a known manner. A vehicle speed sensor 54 provides a vehicle speed signal to the ECU 50.

To enhance the visibility of the loader 40 from the cab 14, when the joystick 52 is manipulated to raise the loader 40, the ECU 50 automatically raises the chassis 12 and cab 14 by extending the front suspension cylinder 28. In addition, the rear suspension cylinder 22 may be retracted to its most compressed length to lower a rear side of the cab 14 relative to a neutral position. Lowering of the cab 14 and raising of the chassis 12 may be independent or combined.

To enhance the visibility of the loader 40 when the joystick 52 is manipulated to lower the loader 40, the ECU 50 automatically lowers the chassis 12 and cab 14 by compressing the front suspension cylinder 28 to its minimum length and/or by extending the rear suspension cylinder 22 to its maximum length. These operations can be performed independently or combined, depending on the configuration of the work vehicle 10 (such as if the work vehicle 10 includes only a rear suspension cylinder 22, only a front suspension cylinder 28, or with both rear and front suspension cylinders 22 and 28). This cab tilting system could be used with any cab suspension which facilitates leveling and is able to be controlled by an external signal, such as generated manually by operator or automatically by an electronic control unit.

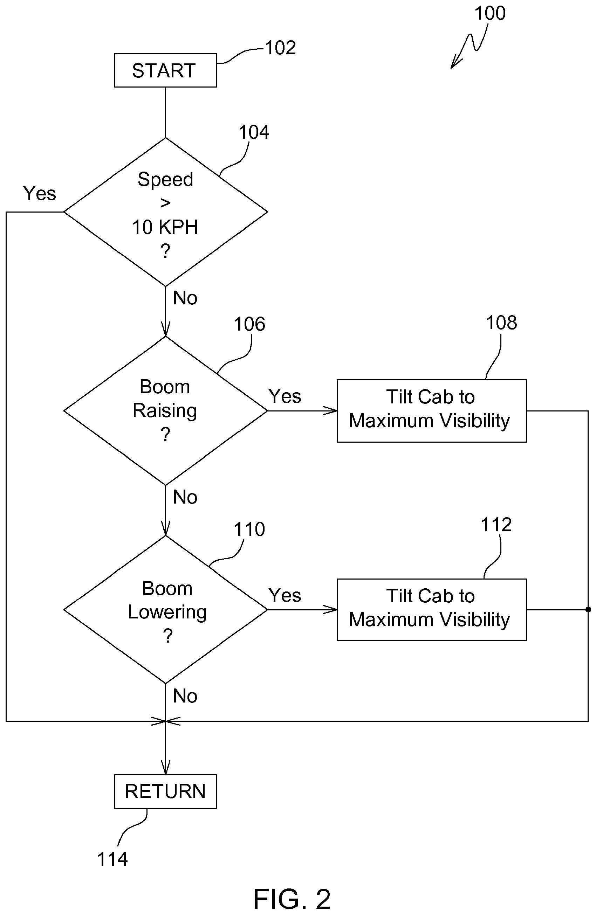

The ECU 50 executes an algorithm 100 represented by Fig. 2. The algorithm 100 starts at step 102. If the speed of the work vehicle 10 derived from the vehicle speed signal of the vehicle speed sensor 54 exceeds a speed threshold, such as for example, 10 kph, then step 104 directs the algorithm 100 to step 114, else to step 106.

If the loader boom 42 is being raised by the operator, then step 106 directs the algorithm 100 to step 108, else to step 110. Step 110 causes the cab 14 to be tilted to maximize visibility of the loader boom 42 from the cab 14, then directs the algorithm 100 to step 114.

If the loader boom 42 is being lowered by the operator, then step 110 directs the algorithm 100 to step 112, else to step 114. Step 112 causes the cab 14 to be tilted to maximize visibility of the loader boom 42 from the cab 14, then directs the algorithm 100 to step 114. The algorithm 100 ends at step 114.

The conversion of the algorithm 100 into a standard language for implementing it in a digital computer or microprocessor, will be evident to one with ordinary skill in the art.

## Claims

1. A work vehicle having a loader; a front axle (16); a rear axle (18); a chassis (12) supported by the front axle (16) and the rear axle (18); a cab (14) pivotally coupled to the chassis (12); a loader boom (42) movably mounted on the chassis (12); a boom cylinder (46) for raising and lowering the loader boom (42); a rear suspension member (22) for raising and lowering the cab (14) with respect to the rear axle (18) and a front suspension member (28) for raising and lowering the chassis (12) together with the cab (14) with respect to the front axle (16); an operator controlled command unit (52) to operate the loader boom (42); an electronic control unit (50) operatively connected to the command unit (52), the rear suspension member (22) and the front suspension member (28), the electronic control unit (50) automatically operating the rear suspension member (22) and/or the front suspension member (28) to raise and lower the cab (14) to improve visibility of the loader (40) from the cab (14) in response to the command unit (52) operating the loader boom (42); and a vehicle speed sensor (54) providing a vehicle speed signal to the electronic control unit (50), the electronic control unit (50) preventing automatic operation of the front suspension member (28) and the rear suspension member (22) if a speed of the work vehicle (10) derived from the vehicle speed signal exceeds a speed threshold.

## Patentansprüche

1. Arbeitsmaschine mit einem Lader; einer Vorderachse (16); einer Hinterachse (18); einem Chassis (12), das von der Vorderachse (16) und der Hinterachse (18) gestützt wird; einem Fahrerhaus (14), das mit dem Chassis (12) schwenkgekoppelt ist; einer Laderschwinge (42), die beweglich an dem Chassis (12) befestigt ist; einem Schwingenzylinder (46) zum Anheben und Absenken der Laderschwinge (42); einem Hinterachsaufhängungsglied (22) zum Anheben und Absenken des Fahrerhauses (14) bezüglich der Hinterachse (18) und einem Vorderachsaufhängungsglied (28) zum Anheben und Absenken des Chassis (12) zusammen mit dem Fahrerhaus (14) bezüglich der Vorderachse (16); einer bedienergesteuerten Ansteuereinheit (52) zum Betreiben der Laderschwinge (42); einer elektronischen Steuereinheit (50), die mit der Ansteuereinheit (52), dem Hinterachsaufhängungsglied (22) und dem Vorderachsaufhängungsglied (28) wirkverbunden ist, wobei die elektronische Steuereinheit (50) als Reaktion darauf, dass die Ansteuereinheit (52) die Laderschwinge (42) betreibt, das Hinterachsaufhängungsglied (22) und/oder das Vorderachsaufhängungsglied (28) automatisch dahingehend betreibt, das Fahrerhaus (14) anzuheben oder abzusenken, um die Sichtbarkeit des Laders (40) von dem Fahrerhaus (14) aus zu verbessern; und einem Fahrzeuggeschwindigkeitssensor (54), der der elektronischen Steuereinheit (50) ein Fahrzeuggeschwindigkeitssignal zuführt, wobei die elektronische Steuereinheit (50) den automatischen Betrieb des Vorderachsaufhängungsglieds (28) und des Hinterachsaufhängungsglieds (22) verhindert, wenn eine aus dem Fahrzeuggeschwindigkeitssignal hergeleitete Geschwindigkeit des Arbeitsfahrzeugs (10) einen Geschwindigkeitsschwellenwert überschreitet.

## Revendications

1. Véhicule de travail ayant un chargeur ; un essieu avant (16) ; un essieu arrière (18) ; un châssis (12) supporté par l'essieu avant (16) et l'essieu arrière (18) ; une cabine (14) couplée de façon pivotante au châssis (12) ; une flèche de chargeur (42) montée de façon mobile sur le châssis (12) ; un vérin de flèche (46) pour lever et baisser la flèche de chargeur (42) ; un élément de suspension arrière (22) pour lever et baisser la cabine (14) par rapport à l'essieu arrière (18) et un élément de suspension avant (28) pour lever et baisser le châssis (12) conjointement à la cabine (14) par rapport à l'essieu avant (16) ; une unité de commande contrôlée par opérateur (52) pour faire fonctionner la flèche de chargeur (42) ; une unité de contrôle électronique (50) opérationnellement connectée à l'unité de commande (52), l'élément de suspension arrière (22) et l'élément de suspension avant (28), l'unité de contrôle électronique (50) faisant fonctionner automatiquement l'élément de suspension arrière (22) et/ou l'élément de suspension avant (28) pour lever et baisser la cabine (14) pour améliorer la visibilité du chargeur (40) depuis la cabine (14) en réponse au fait que l'unité de commande (52) fait fonctionner la flèche de chargeur (42) ; et un capteur de vitesse de véhicule (54) fournissant un signal de vitesse de véhicule à l'unité de contrôle électronique (50), l'unité de contrôle électronique (50) empêchant le fonctionnement automatique de l'élément de suspension avant (28) et de l'élément de suspension arrière (22) si une vitesse du véhicule de travail (10) dérivée du signal de vitesse de véhicule dépasse un seuil de vitesse.
